(19) Europäisches Patentamt
European Patent Office
Office européen des brevets

(11) EP 1 301 548 B1

# (12) EUROPEAN PATENT SPECIFICATION

(45) Date of publication and mention of the grant of the patent:
**18.02.2004 Bulletin 2004/08**

(21) Application number: **01969389.4**

(22) Date of filing: **16.07.2001**

(51) Int Cl.[7]: **C08F 222/10**, G02B 1/04

(86) International application number:
**PCT/EP2001/008153**

(87) International publication number:
**WO 2002/006364 (24.01.2002 Gazette 2002/04)**

(54) **PHOTOCHROMIC RESINS AND ARTICLES; PREPARATION; PRECURSOR COMPOSITIONS**

PHOTOCHROMISCHE HARZE UND GEGENSTÄNDE, HERSTELLUNG UND VORLÄUFERZUSAMMENSETZUNGEN

RESINES ET ARTICLES PHOTOCHROMES, LEUR PREPARATION, ET LEURS PRECURSEURS

(84) Designated Contracting States:
**DE ES FR GB IT**

(30) Priority: **17.07.2000 FR 0009340**

(43) Date of publication of application:
**16.04.2003 Bulletin 2003/16**

(73) Proprietor: **CORNING INCORPORATED**
**Corning, N.Y. 14831 (US)**

(72) Inventors:
- **HENRY, David**
  **F-91150 Morigny-Champigny (FR)**
- **LECRIVAIN, Cécile**
  **F-94120 Fontenay sous Bois (FR)**

(74) Representative: **Le Roux, Martine et al**
**Cabinet Beau de Loménie**
**158, rue de l'Université**
**75340 Paris Cédex 07 (FR)**

(56) References cited:
**WO-A-96/18926** **FR-A- 2 762 845**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 301 548 B1

## Description

The aim of the present invention is :

- photochromic resins having improved photochromic properties ;
- articles, notably ophthalmic articles, which are constituted, wholly or in part only, of such resins ;
- radically polymerisable compositions, which are precursors of said resins ; and
- a method of preparing said resins.

The manufacture of a plastic ophthalmic lens is a difficult exercise insofar as it is required that the structure of said lens be free from optical constraints and obviously possesses satisfactory mechanical properties. In order to attain this result, it is necessary to perfectly master the copolymerisation reactions implemented during the preparation of said lens. It is necessary in any case to avoid attaining the gel point of the reaction system too rapidly since, in the hypothesis of "local over-cross-linking", strings and other optical faults inexorably appear. This problem is a real problem insofar as the basic monomers known hitherto are generally symmetrical difunctional monomers.

Furthermore, within the context of the manufacture of photochromic ophthalmic lenses, either by radical polymerisation of compositions which contain at least one photochromic colorant, or by later diffusion of such colorants within the polymerised matrices, it is necessary that the structure of said lens possesses, in addition to the optical qualities set forth *supra,* a pronounced aptitude to favour the expression of the photochromic properties of said colorants which intervene ; and this without notably altering its mechanical properties.

Obtaining an acceptable compromise - optical properties, even photochromic/mechanical properties - is not an easy thing.

Hitherto, the Applicant and his competitors are still working on the improvement of this compromise.

Numerous pieces of work have, in recent years, concerned the nature of the matrix.

Photochromic transparent organic materials which have good photochromic properties are described in US patent US-A-5,973,039. They are based on a tetraethoxylated bisphenol A dimethacrylate homopolymer and contain suitable photochromic colorants. The polymerisation is carried out in the presence of a suitable radical polymerisation initiator. The optical quality of these materials does however reveal to be insufficient for ophthalmic applications.

US patent US-A-5,349,035 proposes, in order to minimise, even prevent optical constraints, to combine at least one other monomer, notably styrene, with a dimethacrylate type monomer (and notably with that set forth *supra),* and to carry out the copolymerisation in the presence of an effective amount of a chain transfer agent. The matrix obtained is however not suitable for expressing the photochromic properties of photochromic colorants. Said matrix notably has fading kinetics which are much too slow.

Furthermore, in the application WO-A-98 50443, organic materials have been described which are photochromic or not, which are improved, and which are based on at least two different types of difunctional monomers.

In US patent US-A-3,627,690, the beneficial incorporation is very generally described of a base or of an acid, weak to moderate, into photochromic compositions which contain naphthopyrans as photochromes. Said incorporation was described as beneficial with regard to the kinetics of return to the light state, both within solutions as well as within resins, notably of the polymethylmethacrylate or polystyrene type. However, every example describes solutions and the inventors of the present invention have established that said beneficial effect only expressed itself within certain types of resin.

Within the context of the present invention, a beneficial effect has been demonstrated, with regard to the photochromic properties, more particularly with regard to the kinetics of return to the light state, of the presence within very particular resins, of at least one acid or of at least one base. Characteristically, said resins are obtained from at least one monomer which can generate, by homopolymerisation, a rigid structure, and from at least one monomer which can generate, by homopolymerisation, a flexible structure.

According to a first aspect, the present invention relates to photochromic resins which are obtainable by radical copolymerisation of a composition of specific monomers ; and

which characteristically contain, together, an effective amount of at least one photochromic colorant and an effective amount of at least one acidic additive or of at least one basic additive.

More specifically, the present invention relates to photochromic resins which are obtainable by radical copolymerisation of a composition which contains :

- at least one difunctional monomer, selected from those of formula (I) and (II) below :

  + formula (I):

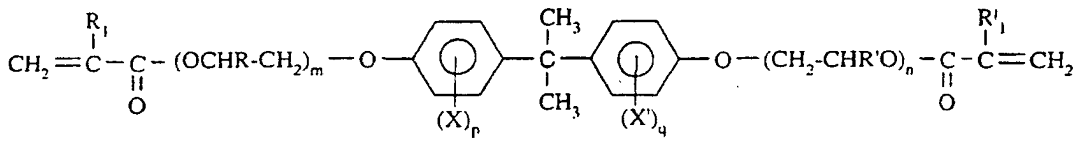

in which :

- $R_1$, $R'_1$, R and R', which are identical or different, independently are a hydrogen or a methyl group ;
- m and n are, independently, integers between 0 and 4 inclusive ; and advantageously are independently equal to 1 or 2 ;
- X and X', which are identical or different, are a halogen and preferably represent a chlorine and/or a bromine ;
- p and q are, independently, integers between 0 and 4 inclusive ;

+ formula (II):

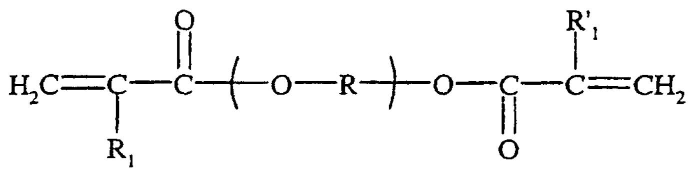

in which:

- $R_1$ and $R'_1$, which are identical or different, independently are a hydrogen or a methyl group ;
- R is a linear or branched alkylene radical having 2 to 8 carbon atoms, a cycloalkylene radical having 3 to 6 carbon atoms, an ether radical of formula (R'-O-R") in which R' and R", which are identical or different, independently are a linear or branched alkylene radical having 2 to 4 carbon atoms;

• at least one other monomer, selected from the monofunctional monomers of formula (III) below and the alkenic difunctional monomers of formula (IV) below :

+ formula (III):

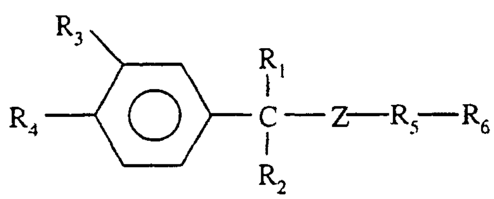

in which :

- $R_1$ and $R_2$, which are identical or different, independently are hydrogen or an alkyl radical, which is linear or branched, advantageously linear, having 1 to 4 carbon atoms ; and particularly advantageously correspond to a methyl group ;
- $R_3$ and $R_4$, which are different, independently are one hydrogen and the other an alkenyl radical having 2 to 6 carbon atoms, advantageously 2 to 4 carbon atoms, and particularly advantageously an isopropenyl radical ;
- Z represents a carbamate function (-NH-CO-O-), a thiocarbamate function (-NH-CO-S-), a urea function (-NH-CO-$NR_7$, with $R_7$ which represents hydrogen or a linear, branched or cyclic alkyl group having 1 to 6 carbon atoms) or an oxazolidone function

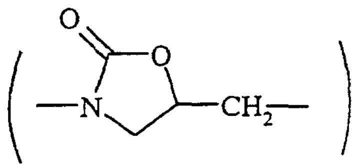 ;

- $R_5$ is selected from the group comprising :

+ the alkylene oxide radicals and the polyalkylene oxide chains of formula:

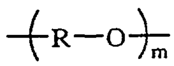

in which the R groups, which are identical or different when m ≥ 2, are alkylene radicals, which are linear or branched and which have 2 to 5 carbon atoms and m is an integer, such that the total number of carbon atoms of said alkylene oxide radicals and polyalkylene oxide chains be between 2 and 112 ;

+ the ester radicals and the polyester chains of formula:

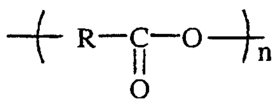

in which the R groups, which are identical or different when n ≥ 2, are alkylene radicals which are linear or branched and which have 2 to 5 carbon atoms and n is an integer, such that the total number of carbon atoms of said ester radicals and polyester chains be between 2 and 168 ;

+ the siloxane radicals and the polysiloxane chains of formula:

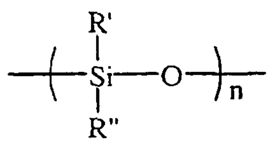

in which the R' and R" groups, which are identical or different when n ≥ 2, are, independently, alkyl radicals having 1 or 2 carbon atoms and n is an integer between 1 and 18 ;

+ the carbonate radicals and the polycarbonate chains of formula:

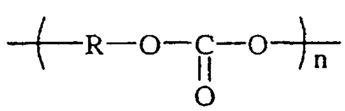

in which the R groups, which are identical or different when n ≥ 2, are alkylene radicals, which are linear or branched and which have 1 to 5 carbon atoms and n is an integer between 1 and 21 ;

- $R_6$ is an alkyl radical or an aryl radical ;

+ formula (IV):

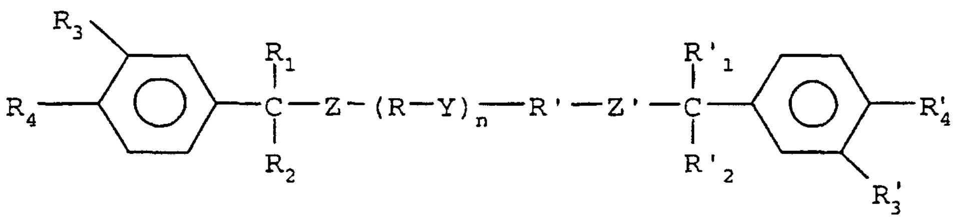

in which:

- $R_1$, $R'_1$, $R_2$ and $R'_2$, which are identical or different, independently are hydrogen or an alkyl radical, which is linear or branched, advantageously linear, and which has 1 to 4 carbon atoms ; and particularly advantageously correspond to a methyl group ;
- $R_3$ and $R_4$, which are different, independently are one hydrogen and the other an alkenyl radical having 2 to 6 carbon atoms, advantageously 2 to 4 carbon atoms, and particularly advantageously an isopropenyl radical ;
- $R'_3$ and $R'_4$, which are different, independently are one hydrogen and the other an alkenyl radical having 2 to 6 carbon atoms, advantageously 2 to 4 carbon atoms, and particularly advantageously an isopropenyl radical ; with advantageously $R_3$=$R'_3$ and $R_4$ = $R'_4$;
- Z represents a carbamate function (-NH-CO-O-), a thiocarbamate function (-NH-CO-S-), a urea function (-NH-CO-NH-) or an oxazolidone function

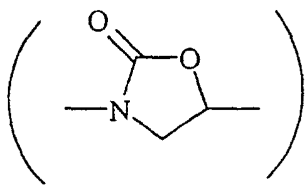 ;

- Z', independently of Z and advantageously with respect to Z, represents a carbamate function (-O-CO-NH-), a thiocarbamate function (-S-CO-NH-), a urea function (-NH-CO-NH-) or an oxazolidone function

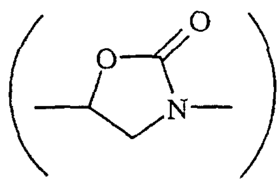 ;

- R' represents a linear or branched alkylene radical having 2 to 4 carbon atoms ;
- R, which is identical or different when $n \geq 2$, is a linear or branched alkylene radical having 2 to 4 carbon atoms ;
- Y, which is identical or different when $n \geq 2$, is oxygen or sulphur ;
- n is an integer defined such that the total number of carbon atoms, contained in the long chain situated between the two Z and Z' units, be at least equal to 18 and advantageously be between 18 and 112 inclusive ;

said resins of the invention also containing :

- an effective amount of at least one photochromic colorant, conferring photochromic properties to them ; as well as
- an effective amount of at least one acidic additive or of at least one basic additive ; said amount, which is effective for improving the kinetics of return to the light state of said resins, representing at the most 5 % of the weight of the polymerisable monomers of the composition; said effective amount advantageously representing between 0.01 and 3 % of the weight of said monomers.

Said photochromic colorant(s) and acid(s) or base(s) are incorporated more or less upstream in the process of preparing the resin. They are added into the composition of monomers (to be polymerised) and/or are allowed to diffuse within the resin (polymerised composition), and they are found in any case in the final resin.

It is proposed below to give several specifications on the monomers of formulae (1), (II), (III) and (IV), on several other monomers and compounds which can be incorporated into the basic compositions, i.e. the precursors of the resins of the invention, on the photochromic colorants which can be incorporated, before developing the key of the present invention : the incorporation of at least one acid or of at least one base, with reference to the improvement of the kinetics of return to the light state.

The difunctional monomers of formula (I) and (II) are monomers which are able to generate, by homopolymerisation, a rigid structure, while the monomers of formula (III) and (IV) are monomers which are able to generate, by homopolymerisation, a flexible structure.

The monomers of formula (I), (II) and (IV) are perfectly described in the literature, notably their combination, in the patent application WO-A-98 50443.

The monomers of formula (III) have been described more recently in the French application FR-A-00 06988, hitherto unpublished.

The following is specified or recalled with reference to said monomers of formulae (I), (II), (III) or (IV).

- The monomers of formula (I) and (II) are difunctional monomers, diacrylates, dimethacrylates, even mixed acrylate and dimethacrylate monomers (reference is made in this regard to the values of $R_1$ and $R'_1$ in said formulae (I) and (II)).

  Said difunctional monomers which are incorporated in the compositions of the invention may or may not all be of the same formula (I) or (II). Thus, the polymerisable compositions of the invention can contain :

  - either difunctional monomers of a same formula (I);
  - or difunctional monomers of a same formula (II) ;
  - or mixtures (non-mixed) of different monomers of formula (I) or (II) ;
  - or mixtures (mixed) of monomers of formula(e) (I) and formula(e) (II).

  According to a preferred variant of the invention, one or more symmetrical difunctional monomers of formula (1) are used. Monomers of formula (I) or (II) are qualified as symmetrical, when $R_1$ and R', groups are identical, the same applies for the R and R' groups, and the substituents X and X' for the compounds of formula (I). Said symmetrical monomers of formula (I) are known and are available commercially or are easily accessible to the person skilled in the art. In fact, it may be noted that said monomers which do not possess a halogen on the aromatic rings correspond to the first monomers of formula (I) in the sense of document WO-A-92 05209. Said monomers of formula (I) having halogen(s) on the aromatic ring(s) are obtained easily by the person skilled in the art by using derivatives which are suitably substituted on said aromatic ring(s). Within the context of the invention, the monomers of formula (I), in which R and R', which are identical, are hydrogen or a methyl group, $R_1$ and $R'_1$ are a methyl group, m and n are independently equal to 1 or 2, and p = q = 0, are preferred. A particularly advantageous variant corresponds to the monomer of formula (I) of the type above with, further R = R' = H and m = n = 2. Said monomer is marketed notably by the company AKZO NOBEL (NL) under the commercial denomination DIACRYL 121. The synthesis of the asymmetrical monomers of formula (I) does not present any particular problem to the person skilled in the art. The monomers of formula (II) are also well known and result from the classical reaction of an aliphatic diol or a short chain alkylene glycol (with a maximum of 8 carbon atoms in said chain) with at least one type of (meth)acrylic derivative depending on whether it is desired to obtain monomers of formula (II) which are symmetrical or asymmetrical at their ends. The resins of the invention are advantageously obtained by radical copolymerisation of a composition which contains at least one monomer of formula (I).
- The monomers of formula (III) are monofunctional monomers the incorporation of which is particularly recommended as monomer precursors of the resins of the invention. They can improve the copolymerisation in question and can confer, as indicated *supra,* flexibility to the resulting copolymer. The following is specified with regard to substituents $R_3$, $R_4$, $R_5$ and $R_6$ of said formula (III). $R_3$ or $R_4$, alkenyl radical, advantageously isopropenyl radical, constitutes the functional group of the (monofunctional) monomers of formula (III). In formula (III), $R_3$ advantageously represents an isopropenyl radical (while $R_4$ represents hydrogen). $R_5$ constitutes the group which can confer flexibility to the final copolymer. $R_6$ is the terminal group of the chain. The nature of said terminal group is not a determining factor. It is advantageously a linear, cyclic or branched alkyl group which comprises 1 to 9 carbon atoms (preferably 1 to 4 carbon atoms) or an aryl group selected from optionally substituted phenyl and naphthyl groups. In formula (III), $R_5$ advantageously represents an alkylene oxide radical or a polyalkylene oxide chain. Particularly preferably, $R_5$ is selected from :

the ethylene oxide radical,
a polyethylene oxide chain,
the propylene oxide radical,
a polypropylene oxide chain,
the tetramethylene oxide radical, and
a polytetramethylene oxide chain.

It will obviously have been understood that for $R_5$, "radical" is referred to when m or n = 1 and "chain" is referred to when m and n > 1. The monomers of formula (III) can be obtained without any particular difficulty by condensation of an isocyanate function-bearing unsaturated compound such as 3-isopropenyl-oc,a dimethylbenzylisocyanate (notably marketed under the reference m-TMI® by the company CYTEC) and of an amine-, hydroxyl-, thiol-, or epoxy-bearing compound which contains a flexible group ($R_5$). The reagents in question are :

- firstly:

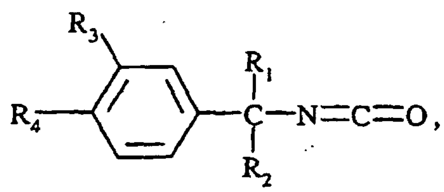

- and secondly:
  $H_2N—R_5—R_6$ or $R_7HN— R_5—R_6$
  or
  $HO—R_5—R_6$
  or
  $HS—R_5—R_6$
  or

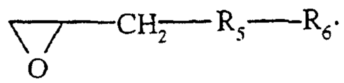

The resins of the invention are advantageously obtained by radical copolymerisation of a composition which contains at least one monomer of formula (III) in which $R_3$ is an isopropenyl radical and $R_5$ represents an alkylene oxide radical or polyalkylene oxide of formula

$$-\!\left(R-O\right)_m\!- ,$$

as defined *supra.*

- The monomers of formula (IV) are difunctional monomers having a long chain. They correspond to the difunctional monomers of type (b), of formula (B), (B') and (B") of the document WO-A-98 50443. For more information thereon, the teaching of document WO-A-98 50443 will be referred to. The monomers of formula (IV), which can be used in the preparation of the resins of the invention, advantageously are of formula (IV) in which $R_3$ and $R'_3$ are isopropenyl radicals, while Y is oxygen and Z and Z' represent urea functions. Other monomers, and notably :

- at least one aromatic monovinylic monomer of formula (C) :

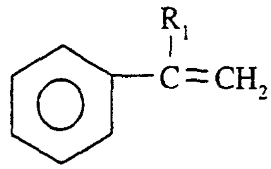

in which $R_1$ = H or $CH_3$ ; and/or

- at least one aromatic divinylic monomer of formula (D) :

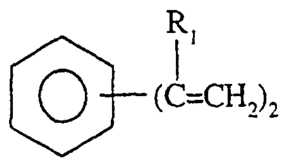

in which $R_1$ = H or $CH_3$ ; and/or

- at least one (meth)acrylic monomer of formula (E) :

$$CH_2 = C(R) -COOR'$$

in which R = H or $CH_3$ and R' is a linear or branched alkyl radical having from 1 to 16 carbon atoms, an optionally substituted benzyl or phenoxy($C_1$-$C_4$)alkyl radical or a polyoxyethylene group of formula $-(CH_2-CH_2-O)_nR''$ in which n is an integer between 1 and 10 and R" = $CH_3$ or $C_2H_5$ ;
and/or

- diallylphthalate,
and/or
- at least one acrylic monomer having at least three reactive functions, advantageously selected from :

  + pentaerythritol triacrylate,
  + pentaerythritol tetraacrylate,
  + propoxylated glycerol triacrylate,
  + trimethylolpropane triacrylate,
  + polyurethane triacrylate,
  + dipentaerythritol hexaacrylate,

and preferably consisting of pentaerythritol triacrylate,
can be found in a mixture with said monomers of formula [(I) and/or (II) + (III) and/or (IV)] in the polymerisable compositions, i.e. precursors of the resins of the invention.

The vinylic monomers of formula (C) - styrene and/or methylstyrene - are advantageously incorporated in order to lower the viscosity of the mixtures of comonomers, to reduce the density of cross-linking of the resin, and to adjust the refractive index of it.

The compounds of formula (D) consist of divinylbenzene (DVB) and di(isopropenyl)benzene. The incorporation of at least one compound of formula (D) can reveal to be advantageous notably in that said compound in general tempers the effects of the compound(s) of formula (C). The beneficial effect of such a compound of formula (D) has been notably demonstrated upon the expression of photochromic properties. In reference to divinylbenzene, insofar as this polymerised compound has a relatively high refractive index (n = 1.61), its incorporation is equally beneficial in that it brings about an increase in the refractive index of the resins of the invention.

The polymerisable composition, *i.e.* the precursor of the resins of the invention, advantageously also contains at least one compound of formula (E). This is a (meth)acrylic monomer as defined above. Notably, it can be butyl, pentyl, hexyl, heptyl, octyl, 2-ethylhexyl, benzyl or phenoxyalkyl (meth)acrylate, or even ethyl triglycol(meth)acrylate. The presence of this type of compound can reveal to be advantageous for adjusting the viscosity of the mixture of comonomers, the density of cross-linking of the resin, the refractive index of said resin, for the turning out (from the

mould) of said resin and for the implementation of finishing treatments of the latter.

The polymerisable composition can also contain diallylphthalate which notably enables the index and/or other optical and mechanical properties to be adjusted.

Finally, the polymerisable composition can advantageously further contain at least one acrylic monomer which has at least three reactive functions (which generally has 3, 4, 5 or 6 reactive functions). Such a monomer is incorporated as a monomer which constitutes the final matrix, but above all as a copolymerisation accelerator. Advantageously, it is selected from :

+ pentaerythritol triacrylate,
+ pentaerythritol tetraacrylate,
+ propoxylated glycerol triacrylate,
+ trimethylolpropane triacrylate,
+ polyurethane triacrylate,
+ dipentaerythritol hexaacrylate,

and preferably consists of pentaerythritol triacrylate.

Its incorporation, in substitution, at least partial, of a difunctional acrylic monomer or in addition to a suitable mixture of monomers improves the polymerisation kinetics, without inducing a fault in the final product.

Generally, said acrylic monomer(s), which is or are at least trifunctional and which is or are polymerisation accelerators, is or are incorporated at the rate of 2 to 10%, advantageously 4 to 6% by weight, with respect to the total weight of the mixture of monomers to be copolymerised.

As specified above, the incorporation of compounds of formula (C) and/or (D) and/or (E) and/or of diallylphthalate and/or of at least one acrylic monomer which is functionalised at least three times is not mandatory. The incorporation does however reveal to be generally advantageous.

The polymerisable compositions of the invention, i.e. the precursors of the resins of the invention, generally contain an effective amount of at least one radical polymerisation initiator, in addition to all the above compounds.

Said intervening radical polymerisation initiator(s) may be thermal or photochemical. Depending on the way the polymerisation - thermal polymerisation and/or photochemical polymerisation - is carried out, a single type of initiator (thermal or photochemical) is used or two types of initiators (thermal and photochemical) are used together.

Said intervening radical polymerisation initiator(s) must be "inert" towards the present photochromic colorant (s).

If a thermal polymerisation is carried out, the intervening radical polymerisation initiator(s) is (are) advantageously selected from the diazo compounds. These compounds are familiar to the person skilled in the art and are commercially available. Examples of such diazo compounds are 2,2'-azobisisobutyronitrile (AIBN), 2,2'-azobis(2-methylbutyronitrile)(AMBN) and 2,2' -azobis(2,4-dimethylpentanenitrile) (ADVN).

The thermal radical polymerisation initiator(s) is(are) used in an effective quantity, generally at a rate of 0.01 to 1% by weight, preferably from 0.05 to 0.5% by weight, with respect to the weight of the monomers present. In the absence of such an initiator or in the presence of too low an amount of it, it becomes necessary to carry out the copolymerisation at a higher temperature and this renders the reaction difficult to control. In the presence of too great an amount of such an initiator, an excess of free radicals may be generated, this excess of free radicals inducing a destruction of the photochromic colorant(s) present and an accelerated fatigue of the final material. In this latter hypothesis, the reaction carried out may also accelerate and become difficult to control.

If a photochemical polymerisation is carried out, the intervening radical polymerisation initiator(s) is(are) especially selected from the acyl oxides and diacyl phosphine oxides. The said initiator advantageously consists in a diacyl phosphine oxide.

In such a context, the intervening photochemical radical polymerisation initiator(s) and the present photochromic colorant(s) are generally competitors with regard to the UV consumption. Due to the said competition, the said photochemical radical plymerisation initiator(s) is(are) generally used in a limited quantity - less than or equal to 0.009 parts by weight per 100 parts by weight of the mixture of monomers to copolymerise (advantageously between 0.002 and 0.009 parts by weight) - in combination with at least one thermal radical polymerisation initiator. A thermal and photochemical polymerisation is then carried out.

It is however not totally excluded to use greater amounts of photochemical initiator(s) (generally at a rate inferior or equal to 2 % by weight with respect to the weight of the monomers present) in contexts in which the above-explained competition is minimized, even cancelled, due to the specific nature of the used colorant(s) and initiator(s). In such contexts, the carried out radical polymerisation may be a pure photochemical one.

The man skilled in the art is able to determine and optimise the used amounts of radical polymerisation (thermal and/or photochemical) initiator(s).

In certain contexts, it can reveal to be advantageous, even indispensable, to further incorporate, within the

polymerisable compositions of the invention, an effective amount (generally less than 5% by weight, in principle 0.01 to 2% by weight, with respect to the weight of monomers present) of at least one polymerisation modifier.

Obviously, it is necessary that said polymerisation modifier does not destroy the photochromic colorant(s) present during the polymerisation and/or does not induce a discoloration of the material on its own. Said polymerisation modifier can be a non-halogenated chain transfer agent such as a linear alkane thiol or bis-mercapto-ethyl ether. Dodecane thiol may be cited as an example of a linear alkane thiol without being limiting. It is not excluded to use other types of chain transfer agents such as alkane thiols substituted with at least one aryl or alkyl radical, or thiophenols. All these compounds are familiar to the person skilled in the art and are commercially available.

The resins of the invention are thus obtained by radical copolymerisation, which is generally carried out in the presence of a copolymerisation auxiliary (see the polymerisation initiators and modifiers described *supra),* of a mixture of monomers as specified *supra.* They are photochromic resins. They therefore contain within them an effective amount of at least one photochromic colorant. Classically, said colorant(s) can be incorporated before and/or after the copolymerisation.

Said colorant(s) is(are) advantageously selected from the group of spiroxazines, spiropyrans, chromenes, fulgides, fulgimides and mixtures thereof.

Very numerous photochromic colorants of the above type are described in the literature and are available on the market.

Spiroxazine colorants which may be used within the context of the present invention have notably been described in the patents US-A-3,562,172, 4,634,767, 4,637,968, 4,720,547, 4,756,973, 4,785,097, 4,792,224, 4,816,584, 4,831,142, 4,909,963, 4,931,219, 4,936,995, 4,986,934, 5,114,621, 5,139,707, 5,233,038, 4,215,010, 4,342,668, 4,699,473, 4,851,530, 4,913,544, 5,171,636, 5,180,524, 5,166,345, in the patent applications EP-A- 0 508 219, 0 232 295 and 0 171 909 and in the application FR-A-2,738,248.

Chromene colorants which are usable within the context of the present invention are notably described in patents US-A-3,567,605, 4,889,413, 4,931,221, 4,980,089, 5,066,818, 5,106,998, 5,130,058, 5,200,116, 5,224,602, 5,238,981, 5,973,039, and the application EP-A-0 562 915. Said chromenes may notably consist of naphthopyrans.

Spiropyran colorants which are also usable within the context of the present invention are notably described in the following texts:

- PHOTOCHROMISM G. Brown, Editor - Techniques of Chemistry-Wiley Interscience - Vol. III - 1971 - Chapter III - Pages 45-294 - R.C. Bertelson.
- PHOTOCHROMISM - Molecules & Systems - Edited by H. Dürr - H. Bouas-Laurent - Elsevier 1990 - Chapter 8 : Spiropyrans - Pages 314-455 - R. Gugliemetti.

The incorporation of chromenes is largely preferred within the context of the present invention. It is with said chromenes that the beneficial action of the acidic additives or basic additives is exacerbated.

It has been indicated that the resins of the invention contain an effective amount of at least one photochromic colorant. It is in fact frequent, within the context of the present invention, to incorporate a combination of photochromic colorants, with the aim of obtaining a specific tint in the darkened state.

By way of reference and in no way limiting, it is indicated at this juncture that said photochromic colorants are generally incorporated in the compositions to be polymerised and polymerised resins of the invention at a rate of 0.01 to 1% by weight, advantageously at a rate of 0.05 to 0.5% by weight with respect to the total weight of monomers.

Said photochromic colorants may themselves very well contain a polymerisable and/or cross-linkable reactive group in their chemical formula as well. They are incorporated themselves, if they are incorporated before the copolymerisation, as co-monomers in the composition to be polymerised, and thus they are chemically bound, *i.e.* grafted, to the matrix of said polymerised composition. Generally, the resins of the invention contain their photochromic colorant (s) free or bound to their matrix.

The key of the present invention is now approached : the additives, acidic or basic, which, within the rigid/flexible matrix of the invention, improve the kinetics of return to the light state.

Said additives, which are acidic or basic, are copolymerisable or non-copolymerisable chemical compounds. They may themselves be incorporated before and/or after the copolymerisation. If they are copolymerisable chemical compounds, they are advantageously incorporated beforehand, such that they are perfectly stabilised in the matrix of the resin.

Said additives, which are acidic or basic, are incorporated in an effective amount which, very generally, is less than 5% by weight of the weight of the monomers constituting the resin. Said effective amount is generally situated between 0.01 and 3% by weight of the weight of said monomers.

In any case, said effective amount is obviously a function of the strength of the acid or the base in question (acids or bases in question if several of them are incorporated together).

Thus, for the acids : those having the strongest acidity (a dissociation constant : $k > 10^{-2}$) are generally used

in amounts of less than 1 % by weight, preferably in amounts neighbouring 0.1% by weight ;

those having weaker acidities (a dissociation constant : $k < 10^{-2}$) are generally used in amounts of greater than or equal to 1% by weight.

The preferred acidic additives - which are copolymerisable or non-copolymerisable - have, in any case, a dissociation constant: $k > 10^{-6}$.

Said acidic additives are advantageously selected from :

- organic sulphonic acids ;
- organic phosphorus-containing acid compounds ; and
- organic carboxylic acids ; said carboxylic acids being particularly preferred.

It is now proposed to expressly specify, in a totally non-limiting manner, the nature of some of said acids which are suitable for the aims of the invention.

Amongst the sulphonic acids :

- para-toluenesulphonic acid,
- naphthalenesulphonic acids,
- sulphosalicylic acids,
- hydroxybenzenesulphonic acids, and
- dodecylbenzenesulphonic acids

may be expressly cited.

Amongst the phosphorus-containing compounds :

- diphenylphosphoric acid,
- diphenylphosphinic acid,
- bis(p-methoxyphenyl)phosphinic acid,
- alkylphosphoric acids, and
- alkylphosphonic acids

may be expressly cited.

The Encylopaedia of Chemical Technology, Kirk-Othmer, second edition, Volume 1, pp. 224 to 254, can be referred to for carboxylic acids, which are particularly preferred, of general formula R-COOH.

Said carboxylic acids are, generally, classified as aliphatic, alicyclic, aromatic and heterocyclic carboxylic acids.

They are mono- or plurifunctional (monocarboxylic, dicarboxylic, tricarboxylic ...), substituted or non-substituted, saturated or unsaturated.

It is proposed to cite a few of them below, in a totally non-limiting manner, which are particularly suitable for the aims of the invention.

Amongst the aliphatic carboxylic acids,

- aliphatic monocarboxylic acids : formic, acetic, propionic, butyric, isobutyric acids, chloroacetic acids, glycolic and cyclohexanecarboxylic acids can be cited in a non-exhaustive manner. As for these, reference can be made to the first part of Table 1, page 226, of the bibliographic reference given above ;
- aliphatic di- and tricarboxylic acids : oxalic, malonic, succinic, fumaric, maleic and malic acids can be cited in a non-exhaustive manner. As for these, reference can be made to the second part of said Table ;
- acrylic and methacrylic acids, crotonic acids, propiolic, itaconic, maleic, fumaric, aconitic acids and mono-2-(methacryloxy)ethyl succinate can also be cited. Given the corrosive and volatile aspect, combined with a strong odour, of the acids of low molecular mass ($C_1$-$C_4$), the above acids having $C_3$ and more are *a priori* preferred.

  Amongst said aliphatic carboxylic acids, those which can be copolymerised with the resin, and notably acrylic, methacrylic and maleic acids, are more particularly preferred in the sense of the invention.

  Amongst the aromatic carboxylic acids,
- aromatic monocarboxylic acids : benzoic acid, o-, m-, p-toluic acids, naphthoic acids, salicylic acids, phenylacetic, mandelic, chloro- and nitrobenzoic acids and veratric acids are cited in a non-exhaustive manner. Amongst said aromatic monocarboxylic acids, 3-methylsalicylic and 4-methylsalicylic are particularly preferred within the context of the present invention ;
- aromatic di- and tricarboxylic acids: o-phthalic, o-phenyldiacetic and tricarballylic acids, and mono-2-(methacryloxy)ethyl phthalate are cited in a non-exhaustive manner.

With reference to the basic additives, it has been seen that they are copolymerisable or non-copolymerisable. Advantageously, they are selected from :

- acrylate or methacrylate monomers, which are bearers of at least one tertiary amine function ; such as dimethylaminoethyl methacrylate and diethylaminoethyl methacrylate ; and
- triarylphosphines, advantageously triphenylphosphine.

The inventors have clearly demonstrated that within the resins based on monomers of formula [(I) and/or (II) + (III) and/or (IV)], the incorporation of said acidic or basic additives is very advantageous. They accelerate the return to the light state.

According to another of its objects, the invention relates to articles, notably ophthalmic articles, which are constituted, wholly or in part only, of a resin of the invention. Non-limiting examples of such articles are ophthalmic corrective lenses, solar lenses, glazings for vehicles or buildings. In these articles, the photochromic material of the invention may constitute the whole of the thickness of the article (mass article) or may only constitute a film or stratified layer applied on a support.

According to another of its objects, the invention also relates to a radically polymerisable composition, which is a precursor of a resin of the invention. Said composition comprises the monomers of formula [(I) and/or (II) + (III) and/or (IV)] and the effective amount of acidic or basic additive(s), in the sense of the invention. Said effective amount is, within this context, incorporated beforehand.

In the same manner, the composition in question can contain the effective amount of photochromic colorant (s). In any case, the composition contains it totally or partially, or not at all.

With reference to the acidic or basic additive(s), it may also be conceived that the polymerisable compositions, which are precursors of the resins of the invention, do not contain them (they are thus incorporated afterwards), or only contain a part of it. Said polymerisable compositions which contain at least one acidic additive or at least one basic additive, whatever the amount of their incorporation, also make up a part of the invention. In the end, the resins of the invention obviously contain an effective amount of it, which is effective with reference to the kinetics of return to fading.

Finally, according to a last object, the present invention relates to a method of preparing a photochromic resin, as described above.

Characteristically, said method comprises radically copolymerising (generally thermally, but other means, notably photochemically, are not at all excluded (see above)) of a mixture of suitable monomers, and incorporating (introducing), in one time, even in several times, beforehand and/or afterwards, together and/or separately, at least one photochromic colorant and at least one acidic or basic additive ; said colorant(s) and additive(s) being finally incorporated in effective amounts.

The implementation variants of said method are thus multiple.

According to a preferred variant, said photochromic colorant(s) and acidic or basic additive(s) are introduced independently before the radical copolymerisation.

When they are introduced afterwards, they penetrate by diffusion within the resin (obtained by copolymerisation beforehand).

It is now proposed to illustrate the invention in a totally non-limiting manner by the Examples below.

The abbreviations used in said Examples are given in Table I below.

TABLE I

| Abbreviation | Material |
|---|---|
| Diacryl 121 or D121 | tetra-ethoxylated bisphenol A dimethacrylate (AKZO Chimie) |
| m-TMI | 3-isopropenyl-$\alpha$,$\alpha$-dimethylbenzylisocyanate (CYTEC) |
| m-PEG 350 | polyethylene glycol methyl ether of $M_n$ = 350 (ALDRICH) |
| JEFFAMINE ED 900 | poly[propylene glycol - block - ethylene glycol block - propylene glycol] bis-(2-aminopropylether) (HUNSTMAN) |
| TMI-m-PEG 350 | styrenic urethane monomer, synthesised in Example 1A |
| TMI-JEFFAMINE ED 900 | styrenic urea monomer, synthesised in Example 8A |
| DVB | divinylbenzene |
| BzMA | benzyl methacrylate |
| PETA | pentaerythritol triacrylate |
| STY | styrene |
| ADVN | 2-2'-azobis(2,4-dimethylpentanenitrile) |

TABLE I (continued)

| Abbreviation | Material |
|---|---|
| NDM | n-dodecane-1-thiol |
| CR49 | (2-(p-dimethylaminophenyl)-2-(g-methoxyphenyl)-5-methyl-7,9-dimethoxy-[2H] naphtho[ 1,2-b]pyran (described in FR-2,751,648) |
| DPP | diphenylphosphoric acid |
| DPPA | diphenylphosphinic acid |
| TPP | triphenylphosphine |
| MAA | methacrylic acid |
| MSA | 3-methylsalicylic acid |

Example 1 :

A. Synthesis of the flexible, monofunctional styrenic urethane monomer (of formula III)

140 parts by weight of polyethylene glycol monomethyl ether Mn=350 (m-PEG 350) and 0.06 g of tin dibutyldilaurate are charged into a glass recipient equipped with a stirrer and a nitrogen purge.

The mixture is heated at 50°C with stirring and bubbling of nitrogen.

80.5 parts by weight of m-TMI are then added over about 1 hour.

After the addition of the m-TMI, the mixture is heated at 60°C for 1 h to complete the reaction.

The urethane resin obtained (referenced TMI-m-PEG 350) is colourless and is free from residual isocyanate functions.

B. Preparation of the improved photochromic resin :

20 parts by weight of the styrenic urethane monomer TMI-m-PEG350 (resin obtained above), 80 parts by weight of Diacryl 121 (monomer of formula I), 0.5 part by weight of NDM as chain transfer agent, 0.26 part by weight of ADVN as radical initiator, 0.05 part by weight of CR49 as photochromic colorant and 4 parts by weight of methacrylic acid (MAA) as acidic additive are mixed, until total dissolution of the compounds.

The mixture of monomers obtained is degassed and is poured into a mould comprising two parts between which are placed a plastified PVC gasket of 2 mm thickness, a clamp securing said two parts by squeezing said joint.

The polymerisation is then continued for 16 h at 53°C and 2h at 90°C.

After cooling to ambient temperature, the sample obtained is removed from the mould.

Example 2 :

The method of Example 1 was repeated, except that the 4 parts by weight of methacrylic acid (MAA) were replaced by 0.1 part by weight of diphenylphosphate (DPP) as acidic additive.

Example 3 :

The method of Example 1 was repeated, except that the 4 parts by weight of methacrylic acid (MAA) were replaced by 0.1 part by weight of diphenylphosphonic acid (DPPA).

Example 4 :

The method of Example 1 was repeated, except that 2 parts by weight of triphenylphosphine (TPP) were added instead of the 4 parts by weight of methacrylic acid (MMA).

Example 5 :

The method of Example 1 was repeated, except that 1 part by weight of 3-methylsalicylic acid (MSA) was added instead of the 4 parts by weight of methacrylic acid (MMA).

Example 6 :

29 parts by weight of the styrenic urethane monomer TMI-m-PEG 350 as synthesised in Example 1A were mixed with 44 parts by weight of Diacryl 121, 10 parts by weight of BzMA, 5 parts by weight of DVB, 5 parts by weight of PETA, 0.5 part by weight of NDM, 0.05 part by weight of CR49, 0.26 part by weight of ADVN and 4 parts by weight of MAA.

The resin composition obtained was polymerised in glass moulds as explained in Example 1B.

Example 7 :

The method of Example 6 was repeated, except that the 4 parts by weight of MAA were replaced by 0.1 part by weight of DPP.

Example 8 :

A. Synthesis of the difunctional styrenic urea monomer (of formula IV):

360 parts by weight of JEFFAMINE ED 900 Mn=900 are charged into a glass recipient equipped with a stirrer, an addition funnel and a dry nitrogen purge.

The mixture is heated at 50°C under bubbling of nitrogen until the starting material had completely melted.

161 parts by weight of m-TMI were then added over 1h, by using the addition funnel.

The temperature of the mixture is maintained at 60°C for 1 h in order to complete the reaction.

The urea monomer obtained (referenced TMI-JEFFAMINE ED 900) is a slightly viscous colourless liquid.

B. Preparation of the improved photochromic resin :

The same method as in Example 6 was repeated in order to obtain the improved photochromic resin, except that the 29 parts by weight of TMI-m-PEG 350 were replaced by 29 parts by weight of TMI-JEFFAMINE ED 900.

Comparative Example 9 :

A photochromic resin was prepared as explained in Example 1B, except that 20 parts of styrene were used instead of the 20 parts of TMI-m-PEG350 and that the acidic additive was omitted.

The resin obtained was polymerised by the same method as that described in Example 1B.

Comparative Example 10:

A photochromic resin composition was prepared as explained in Example 1B, except that 20 parts by weight of styrene were used instead of the 20 parts by weight of TMI-m-PEG 350.

The resin obtained was hardened as described in Example 1B.

Comparative Example 11 :

The same method as in Comparative Example 9 was repeated, except that 0.1 part by weight of diphenylphosphate (DPP) was added as acidic additive.

Comparative Example 12 :

A photochromic resin was prepared and polymerised as described in Example 1B, except that the styrenic monomer TMI-m-PEG 350 and the acidic additive were omitted.

The composition of the resins of each one of the Examples and comparative Examples above is summarised in Table II below.

TABLE II

| | Examples | | | | | | | | Comparative Examples | | | |
|---|---|---|---|---|---|---|---|---|---|---|---|---|
| Materials | 1 | 2 | 3 | 4 | 5 | 6 | 7 | 8 | 9 | 10 | 11 | 12 |
| D121 | 80 | 80 | 80 | 80 | 80 | 44 | 44 | 44 | 80 | 80 | 80 | 100 |
| TMI-m-PEG350 | 20 | 20 | 20 | 20 | 20 | 29 | 29 | 0 | 0 | 0 | 0 | 0 |
| TMI-JEFFAMINE ED 900 | 0 | 0 | 0 | 0 | 0 | 0 | 0 | 29 | 0 | 0 | 0 | 0 |
| STY | 0 | 0 | 0 | 0 | 0 | 0 | 0 | 0 | 20 | 20 | 20 | 0 |
| DBV | 0 | 0 | 0 | 0 | 0 | 12 | 12 | 12 | 0 | 0 | 0 | 0 |
| BzMA | 0 | 0 | 0 | 0 | 0 | 10 | 10 | 10 | 0 | 0 | 0 | 0 |
| PETA | 0 | 0 | 0 | 0 | 0 | 5 | 5 | 5 | 0 | 0 | 0 | 0 |
| ADVN | 0.26 | 0.26 | 0.26 | 0.26 | 0.26 | 0.26 | 0.26 | 0.26 | 0.26 | 0.26 | 0.26 | 0.26 |
| NDM | 0.5 | 0.5 | 0.5 | 0.5 | 0.5 | 0.5 | 0.5 | 0.5 | 0.5 | 0.5 | 0.5 | 0.5 |
| CR49 | 0.05 | 0.05 | 0.05 | 0.05 | 0.05 | 0.05 | 0.05 | 0.05 | 0.05 | 0.05 | 0.05 | 0.05 |
| DPP | 0 | 0.1 | 0 | 0 | 0 | 0 | 0.1 | 0.1 | 0 | 0 | 0.1 | 0 |
| DPPA | 0 | 0 | 0.1 | 0 | 0 | 0 | 0 | 0 | 0 | 0 | 0 | 0 |
| TPP | 0 | 0 | 0 | 2 | 0 | 0 | 0 | 0 | 0 | 0 | 0 | 0 |
| MAA | 4 | 0 | 0 | 0 | 0 | 4 | 0 | 0 | 0 | 4 | 0 | 0 |
| MSA | 0 | 0 | 0 | 0 | 1 | 0 | 0 | 0 | 0 | 0 | 0 | 0 |

The optical quality was evaluated by visual inspection.

Lenses which were free from any defects were denoted « + ».

Lenses having some defects, such as flow lines or striations, were denoted « - » .

The photochromic performances were evaluated by submitting a 2 mm thick photochromic lens to a UV light (of a xenon arc lamp) at 25°C until the coloration of the lens attained an equilibrium.

The fading kinetics are recorded by measuring the transmission at 580 nm versus time using a spectrophotometer HP 8452 from Hewlett Packard.

The percentage recovery was calculated as follows :

$$\% \text{ recovery} = (Tt-Td/Tb-Td) \times 100 \;;$$

with Td which is the transmittance at 580 nm, at the equilibrium, of the material having darkened, Tt is the transmittance at 580 nm, at a given time, and Tb which is the transmittance at 580 nm, of the non-coloured state.

The amount of fading is marked "+" if at least 50 % recovery is observed after 10 min of fading.

The amount of fading is marked "-" if the percentage recovery is less than 50% after 10 min of fading.

The results of the tests aiming to test the photochromic properties and the optical quality are given in Table III below.

TABLE III

| | Amount of fading (%) and optical quality | | | | | | | | | | | |
|---|---|---|---|---|---|---|---|---|---|---|---|---|
| | Examples | | | | | | | | Comparative Examples | | | |
| Time (s) | 1 | 2 | 3 | 4 | 5 | 6 | 7 | 8 | 9 | 10 | 11 | 12 |
| 0 | 0 | 0 | 0 | 0 | 0 | 0 | 0 | 0 | 0 | 0 | 0 | 0 |
| 1 | 1 | 1 | 1 | 1 | 2 | 2 | 2 | 2 | 0.2 | 0.2 | 0.1 | 5 |
| 2 | 2 | 2 | 2 | 3 | 5 | 3 | 4 | 4 | 0.6 | 0.5 | 0.1 | 1 |
| 4 | 4 | 5 | 6 | 6 | 9 | 6 | 7 | 8 | 1 | 1 | 0.5 | 3 |
| 8 | 8 | 10 | 11 | 12 | 17 | 12 | 15 | 16 | 2 | 3 | 1 | 6 |
| 100 | 50 | 66 | 67 | 73 | 84 | 66 | 87 | 88 | 14 | 15 | 14 | 48 |
| 200 | 63 | 81 | 82 | 84 | 94 | 76 | 92 | 92 | 17 | 19 | 18 | 54 |
| 400 | 75 | 88 | 89 | 91 | 98 | 85 | 94 | 94 | 25 | 26 | 26 | 59 |
| 600 | 80 | 90 | 91 | 92 | 98 | 89 | 94 | 95 | 29 | 30 | 31 | 63 |
| 800 | 85 | 92 | 94 | 94 | 99 | 92 | 95 | 96 | 31 | 32 | 33 | 66 |
| Amount of fading | + | + | + | + | + | + | + | + | - | - | - | - |
| Optical quality | + | + | + | + | + | + | + | + | + | + | + | - |

## Claims

**1.** A photochromic resin, obtainable by radical copolymerisation of a composition containing :

- at least one difunctional monomer, selected from those of formula (I) and (II) below :

  + formula (I):

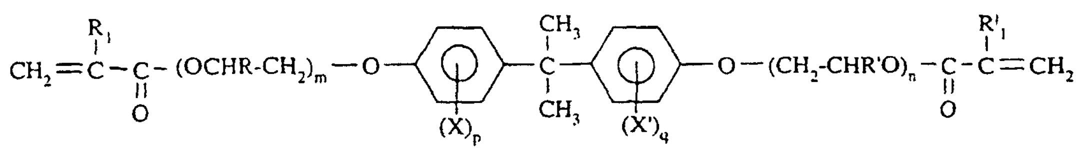

in which :

- $R_1$, $R'_1$, R and R', which are identical or different, independently are a hydrogen or a methyl group ;
- m and n are, independently, integers between 0 and 4 inclusive ; and advantageously are independently equal to 1 or 2 ;
- X and X', which are identical or different, are a halogen and preferably represent a chlorine and/or a bromine ;
- p and q are, independently, integers between 0 and 4 inclusive ;

  + formula (II):

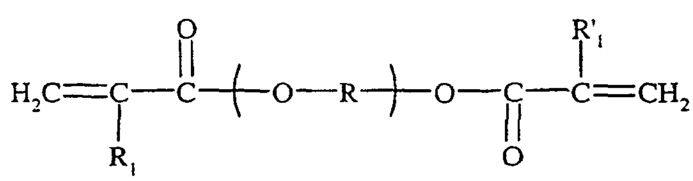

in which :

- $R_1$ and $R'_1$, which are identical or different, independently are a hydrogen or a methyl group ;
- R is a linear or branched alkylene radical having 2 to 8 carbon atoms, a cycloalkylene radical having 3 to 6 carbon atoms, an ether radical of formula (R'-O-R") in which R' and R", which are identical or different, independently are a linear or branched alkylene radical having 2 to 4 carbon atoms;

• at least one other monomer, selected from the monofunctional monomers of formula (III) below and the alkenic difunctional monomers of formula (IV) below :

+ formula (III):

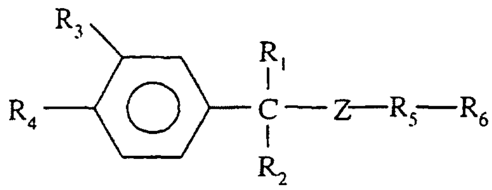

in which :

- $R_1$ and $R_2$, which are identical or different, independently are hydrogen or an alkyl radical, which is linear or branched, advantageously linear, having 1 to 4 carbon atoms ; and particularly advantageously correspond to a methyl group ;
- $R_3$ and $R_4$, which are different, independently are one hydrogen and the other an alkenyl radical having 2 to 6 carbon atoms, advantageously 2 to 4 carbon atoms, and particularly advantageously an isopropenyl radical ;
- Z represents a carbamate function (-NH-CO-O-), a thiocarbamate function (-NH-CO-S-), a urea function (-NH-CO-$NR_7$, with $R_7$ which represents hydrogen or a linear, branched or cyclic alkyl group having 1 to 6 carbon atoms) or an oxazolidone function

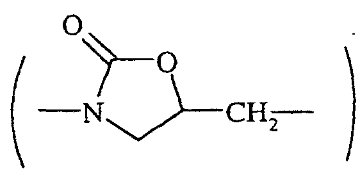 ;

- $R_5$ is selected from the group comprising :

+ the alkylene oxide radicals and the polyalkylene oxide chains of formula:

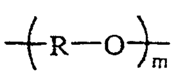

in which the R groups, which are identical or different when m ≥ 2, are alkylene radicals, which are linear or branched and which have 2 to 5 carbon atoms and m is an integer, such that the total number of carbon atoms of said alkylene oxide radicals and polyalkylene oxide chains be between 2 and 112 ;

+ the ester radicals and the polyester chains of formula:

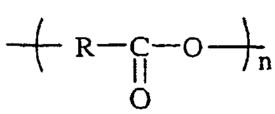

in which the R groups, which are identical or different when $n \geq 2$, are alkylene radicals which are linear or branched and which have 2 to 5 carbon atoms and n is an integer, such that the total number of carbon atoms of said ester radicals and polyester chains be between 2 and 168 ;

+ the siloxane radicals and the polysiloxane chains of formula:

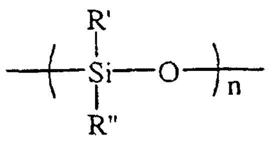

in which the R' and R" groups, which are identical or different when $n \geq 2$, are, independently, alkyl radicals having 1 or 2 carbon atoms and n is an integer between 1 and 18 ;

+ the carbonate radicals and the polycarbonate chains of formula:

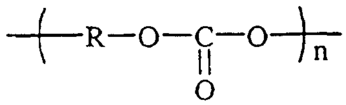

in which the R groups, which are identical or different when $n \geq 2$, are alkylene radicals, which are linear or branched and which have 1 to 5 carbon atoms and n is an integer between 1 and 21 ;

- $R_6$ is an alkyl radical or an aryl radical ;

+ formula (IV):

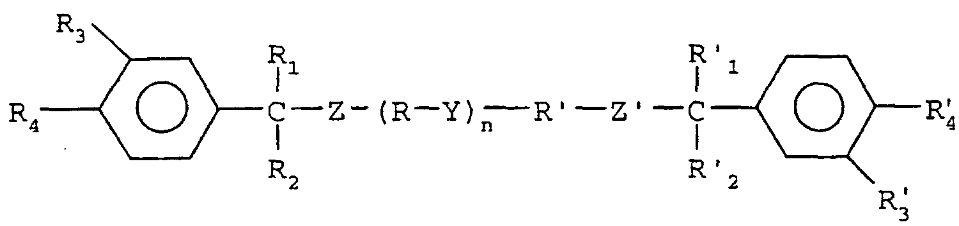

in which :

- $R_1$, $R'_1$, $R_2$ and $R'_2$, which are identical or different, independently are hydrogen or an alkyl radical, which is linear or branched, advantageously linear, and which has 1 to 4 carbon atoms ; and particularly advantageously correspond to a methyl group;
- $R_3$ and $R_4$, which are different, independently are one hydrogen and the other an alkenyl radical having 2 to 6 carbon atoms, advantageously 2 to 4 carbon atoms, and particularly advantageously an isopropenyl radical ;
- $R'_3$ and $R'_4$, which are different, independently are one hydrogen and the other an alkenyl radical having 2 to 6 carbon atoms, advantageously 2 to 4 carbon atoms, and particularly advantageously an isopropenyl radical ; with advantageously $R_3 = R'_3$ and $R_4 = R'_4$ ;
- Z represents a carbamate function (-NH-CO-O-), a thiocarbamate function (-NH-CO-S-), a urea function (-NH-CO-NH-) or an oxazolidone function

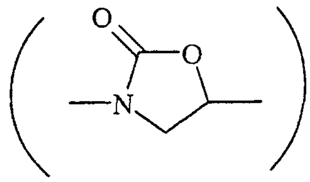

;

- Z', independently of Z and advantageously with respect to Z, represents a carbamate function (-O-CO-NH-), a thiocarbamate function (-S-CO-NH-), a urea function (-NH-CO-NH-) or an oxazolidone function

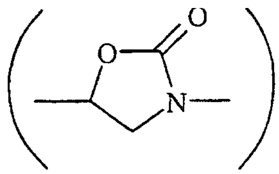

;

- R' represents a linear or branched alkylene radical having 2 to 4 carbon atoms ;
- R, which is identical or different when n ≥ 2, is a linear or branched alkylene radical having 2 to 4 carbon atoms ;
- Y, which is identical or different when n ≥ 2, is oxygen or sulphur ;
- n is an integer defined such that the total number of carbon atoms, contained in the long chain situated between the two Z and Z' units, be at least equal to 18 and advantageously be between 18 and 112 inclusive ;

said resin containing :

- an effective amount of at least one photochromic colorant, conferring photochromic properties to it ; as well as
- an effective amount of at least one acidic additive or of at least one basic additive ; said amount, which is effective for improving the kinetics of return to the light state of said resin, representing at the most 5 % of the weight of the polymerisable monomers of the composition; said effective amount advantageously representing between 0.01 and 3 % of the weight of said monomers.

2. The resin according to claim 1, **characterised in that** said composition contains at least one monomer of formula (I).

3. The resin according to one of claims 1 or 2, **characterised in that** said composition contains at least one monomer of formula (III) in which $R_3$ is an isopropenyl radical and $R_5$ represents an alkylene oxide radical or polyalkylene oxide of formula:

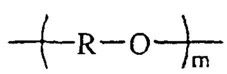

.

4. The resin according to any one of claims 1 to 3, **characterised in that** said composition contains at least one monomer of formula (IV) in which $R_3$ and $R'_3$ are isopropenyl radicals, Y = O and Z and Z' are urea functions.

5. The resin according to any one of claims 1 to 4, **characterised in that** said composition further contains :

- at least one aromatic monovinylic monomer of formula (C) :

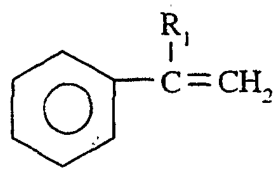

in which $R_1$ = H or $CH_3$;

and/or

- at least one aromatic divinylic monomer of formula (D) :

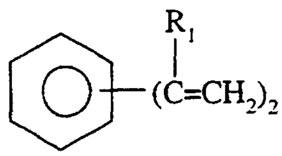

in which $R_1$ = H or $CH_3$ ;

and/or

- at least one (meth)acrylic monomer of formula (E) :

$$CH_2 = C(R) -COOR'$$

in which R = H or $CH_3$ and R' is a linear or branched alkyl radical having 1 to 16 carbon atoms, an optionally substituted benzyl or phenoxy($C_1$-$C_4$)alkyl radical or a polyoxyethylene group of formula $-(CH_2-CH_2-O)_nR''$ in which n is an integer between 1 and 10 and R" = $CH_3$ or $C_2H_5$;

and/or

- diallylphthalate,

and/or

- at least one acrylic monomer having at least three reactive functions, advantageously selected from :

  + pentaerythritol triacrylate,
  + pentaerythritol tetraacrylate,
  + propoxylated glycerol triacrylate,
  + trimethylolpropane triacrylate,
  + polyurethane triacrylate,
  + dipentaerythritol hexaacrylate,

and preferably consisting of pentaerythritol triacrylate.

6. The resin according to any one of claims 1 to 5, **characterised in that** said photochromic colorant(s) is(are) selected from chromenes.

7. The resin according to any one of claims 1 to 6, **characterised in that** it contains at least one acidic additive, selected from the group of copolymerisable acids and non-copolymerisable acids ; said acidic additive advantageously having a dissociation constant : $k > 10^{-6}$.

8. The resin according to claim 7, **characterised in that** said acidic additive is selected from :

- organic sulphonic acids ;
- organic phosphorus-containing acid compounds ;
- carboxylic acids.

**9.** The resin according to claim 8, **characterised in that** said acidic additive is a sulphonic acid, notably selected from para-toluenesulphonic acid, naphthalenesulphonic acids, sulphosalicylic acids, hydroxybenzene-sulphonic acids and dodecylbenzenesulphonic acids.

**10.** The resin according to claim 8, **characterised in that** said acidic additive is a phosphorus-containing compound, notably selected from diphenylphosphoric acid, diphenylphosphinic acid, bis(p-methoxy-phenyl)phosphinic acid, alkylphosphoric acids and alkylphosphonic acids.

**11.** The resin according to claim 8, **characterised in that** said acidic additive is an aliphatic carboxylic acid, notably selected from formic, acetic, propionic, butyric, isobutyric acids, chloroacetic acids, glycolic, cyclohexanecarboxylic, oxalic, malonic, succinic, fumaric, maleic, malic, acrylic, methacrylic acids, crotonic acids, propiolic, itaconic, aconitic acids and mono-2-(methacryloxy)ethyl succinate ; advantageously consisting of an acrylic, methacrylic or maleic acid.

**12.** The resin according to claim 8, **characterised in that** said acidic additive is an aromatic carboxylic acid, notably selected from benzoic acid, o-, m-, p-toluic acids, naphthoic acids, salicylic acids, phenylacetic, mandelic acids, chloro- and nitrobenzoic acids, veratric, o-phthalic, o-phenyldiacetic, tricarballylic acids and mono-2-(methacryloxy)ethyl phthalate ; advantageously consisting of 3-methylsalicylic acid or 4-methylsalicylic acid.

**13.** The resin according to any one of claims 1 to 6, **characterised in that** it contains at least one basic additive, selected from the group of copolymerisable bases and non-copolymerisable bases.

**14.** The resin according to claim 13, **characterised in that** said basic additive is an acrylate or methacrylate monomer, which is a carrier of at least one tertiary amine function, notably selected from dimethylaminoethyl methacrylate and diethylaminoethyl methacrylate.

**15.** The resin according to claim 13, **characterised in that** said basic additive is a triarylphosphine, advantageously triphenylphosphine.

**16.** An article, notably an ophthalmic article, which is constituted wholly or in part of a resin according to any one of claims 1 to 15.

**17.** A radically polymerisable composition, which is a precursor of a resin according to any one of claims 1 to 15, **characterised in that** it comprises :

- at least one difunctional monomer selected from those of formula (I) and formula (II), as defined in claim 1 ;
- at least one other monomer, selected from the monofunctional monomers of formula (III) and the alkenic difunctional monomers of formula (IV), formulae (III) and (IV) as defined in claim 1 ;
- at least one acidic additive or at least one basic additive ; advantageously in an amount, effective for improving the kinetics of return to the light state of a photochromic resin obtained from said polymerisable composition, representing at the most 5 % of the weight of the polymerisable monomers which are present in said composition ; said effective amount representing very advantageously between 0.01 and 3 % of the weight of said monomers.

**18.** A method of preparing a photochromic resin according to any one of claims 1 to 15, **characterised in that** it comprises :

- radically copolymerising a composition containing at least one difunctional monomer selected from those of formulae (I) and (II), as defined in claim 1, and. at least one other monomer selected from the monofunctional monomers of formula (III) and the alkenic difunctional monomers of formula (IV), formulae (III) and (IV) as defined in claim 1 ;
- introducing, before said copolymerisation, into the composition to be copolymerised and/or, advantageously or, after said copolymerisation, into the copolymerised composition, at least one photochromic colorant and at least one acidic or basic additive, said colorant(s) and additive(s) intervening, together or separately, in an

amount effective in order to confer photochromic properties to the resin and to improve the kinetics of return to the light state of said resin, respectively.

## Patentansprüche

1. Photochromes Harz, das durch radikalische Copolymerisation einer Zusammensetzung erhältlich ist, die enthält:

• mindestens ein difunktionelles Monomer, ausgewählt aus solchen der nachstehend angegebenen Formeln (I) und (II):

+ Formel (I):

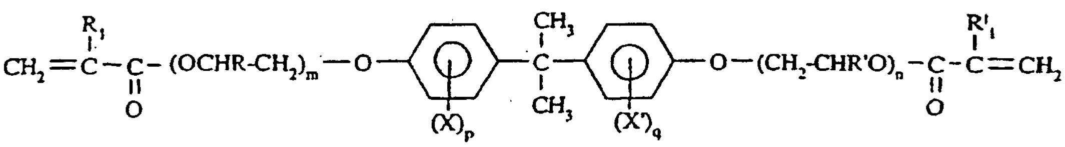

worin bedeuten:

- $R_1$, $R'_1$, R und R', die gleich oder verschieden sind, unabhängig voneinander ein Wasserstoffatom oder eine Methyl-Gruppe;
- m und n unabhängig voneinander ganze Zahlen zwischen 0 und einschließlich 4; und vorzugsweise unabhängig voneinander die Zahl 1 oder 2;
- X und X', die gleich oder verschieden sind, ein Halogenatom und vorzugsweise ein Chlor- und/oder Bromatom;
- p und q unabhängig voneinander ganze Zahlen zwischen 0 und einschließlich 4;

+ Formel (II):

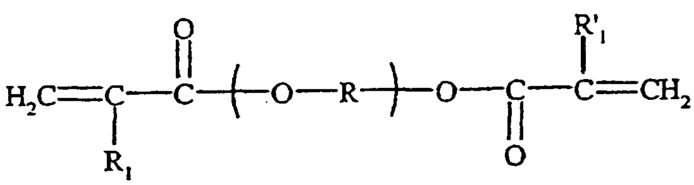

worin bedeuten:

- $R_1$ und $R'_1$, die gleich oder verschieden sind, unabhängig voneinander ein Wasserstoffatom oder eine MethylGruppe;
- R einen linearen oder verzweigten Alkylen-Rest mit 2 bis 8 Kohlenstoffatomen, einen Cycloalkylen-Rest mit 3 bis 6 Kohlenstoffatomen, einen Ether-Rest der Formel (R'-O-R"), worin R' und R", die gleich oder verschieden sind, unabhängig voneinander stehen für einen linearen oder verzweigten Alkylen-Rest mit 2 bis 4 Kohlenstoffatomen;

• mindestens ein anderes (weiteres) Monomer, ausgewählt aus den monofunktionellen Monomeren der nachstehend angegebenen Formel (III) und den difunktionellen Alken-Monomeren der nachstehend angegebenen Formel (IV):

+ Formel (II):

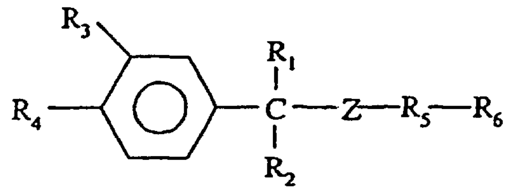

worin bedeuten:

- $R_1$ und $R_2$, die gleich oder verschieden sind, unabhängig voneinander ein Wasserstoffatom oder einen Alkylrest, der linear oder verzweigt, vorzugsweise linear ist, mit 1 bis 4 Kohlenstoffatomen; und die besonders bevorzugt einer Methylgruppe entsprechen; - $R_3$ und $R_4$, die verschieden sind, unabhängig voneinander der eine ein Wasserstoffatom und der andere einen Alkenylrest mit 2 bis 6 Kohlenstoffatomen, vorzugsweise 2 bis 4 Kohlenstoffatomen und besonders bevorzugt einen Isopropenylrest; - Z eine Carbamat-Funktion (-NH-CO-O-), eine Thiocarbamat-Funktion (-NH-CO-S-), eine Harnstoff-Funktion (-NH-CO-$NR_7$, worin $R_7$ steht für Wasserstoff oder eine lineare, verzweigte oder cyclische Alkylgruppe mit 1 bis 6 Kohlenstoffatomen) oder eine Oxazolidon-Funktion

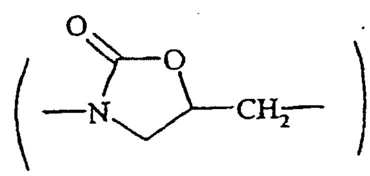 ;

- $R_5$ ausgewählt ist aus der Gruppe, die umfasst:

+ die Alkylenoxid-Reste und die Polyalkylenoxid-Ketten der Formel:

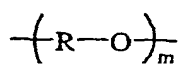

worin die Gruppen R, die gleich oder verschieden sind, wenn m ≥ 2, für Alkylen-Reste stehen, die linear oder verzweigt sind und 2 bis 5 Kohlenstoffatome aufweisen, und m steht für eine ganze Zahl, sodass die Gesamtanzahl der Kohlenstoffatome der Alkylenoxid-Reste und der Polyalkylenoxid-Ketten zwischen 2 und 112 liegt;

+ die Ester-Reste und die Polyester-Ketten der Formel:

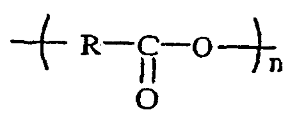

worin die R-Gruppen, die gleich oder verschieden sind, wenn n ≥ 2, Alkylen-Reste darstellen, die linear oder verzweigt sind und 2 bis 5 Kohlenstoffatome aufweisen, und n steht für eine ganze Zahl, sodass die Gesamtanzahl der Kohlenstoffatome der Ester-Reste und der Polyesterketten zwischen 2 und 168 liegt;

+ die Siloxan-Reste und die Polysiloxan-Ketten der Formel

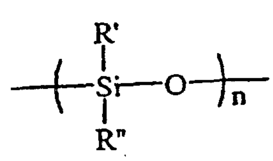

worin die Gruppen R' und die R", die gleich oder verschieden sind, wenn n ≥ 2, unabhängig voneinander stehen für Alkyl-Reste mit 1 oder 2 Kohlenstoffatomen und n steht für eine ganze Zahl zwischen 1 und 18;

+ die Carbonat-Reste und die Polycarbonat-Ketten der Formel:

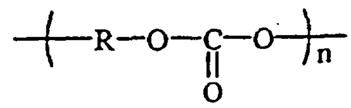

worin die R-Gruppen, die gleich oder verschieden sind, wenn n ≥ 2, Alkylen-Reste darstellen, die linear oder verzweigt sind und 1 bis 5 Kohlenstoffatome aufweisen und n für eine ganze Zahl zwischen 1 und 21 steht; - $R_6$ einen Alkyl-Rest oder einen Aryl-Rest;

+ Formel (IV)

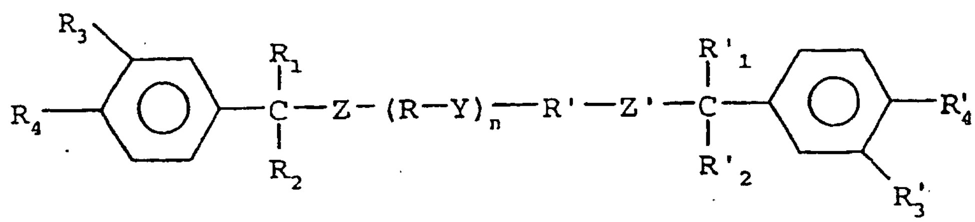

worin bedeuten:

- $R_1$, $R'_1$, $R_2$ und $R'_2$, die gleich oder verschieden sind, unabhängig voneinander ein Wasserstoffatom oder einen Alkylrest, der linear oder verzweigt ist, vorzugsweise linear ist, und 1 bis 4 Kohlenstoffatome aufweist, und die besonders bevorzugt einer Methylgruppe entsprechen;
- $R_3$ und $R_4$, die verschieden sind, unabhängig voneinander der eine ein Wasserstoffatom und der andere einen Alkenyl-Rest mit 2 bis 6 Kohlenstoffatomen, vorzugsweise 2 bis 4 Kohlenstoffatomen, und besonders bevorzugt einen Isopropenylrest;
- $R'_3$ und $R'_4$, die verschieden sind, unabhängig voneinander der eine ein Wasserstoffatom und der andere einen Alkenyl-Rest mit 2 bis 6 Kohlenstoffatomen, vorzugsweise 2 bis 4 Kohlenstoffatomen, und besonders bevorzugt einen Isopropenylrest; wobei vorzugsweise $R_3$ = $R'_3$ und $R_4$ = $R'_4$;
- Z eine Carbamat-Funktion (-NH-CO-O-), eine Thiocarbamat-Funktion (-NH-CO-S-), eine Harnstoff-Funktion (-NH-CO-NH-) oder eine Oxazolidon-Funktion

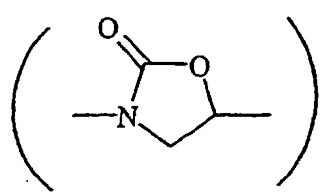

;

- Z' unabhängig von Z und vorzugsweise im Hinblick auf Z eine Carbamat-Funktion (-O-CO-NH-), eine Thiocarbamat-Funktion (-S-CO-NH-), eine Harnstoff-Funktion (-NH-CO-NH-) oder eine Oxazolidon-Funktion

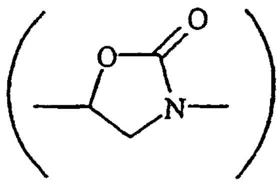 ;

- R' einen linearen oder verzweigten Alkylen-Rest mit 2 bis 4 Kohlenstoffatomen;
- R, die gleich oder verschieden sind, wenn $n \geq 2$, einen linearen oder verzweigten Alkylen-Rest mit 2 bis 4 Kohlenstoffatomen;
- Y, die gleich oder verschieden sind, wenn $n \geq 2$, Sauerstoff oder Schwefel;
- n eine ganze Zahl, die so definiert ist, dass die Gesamtanzahl der Kohlenstoffatome, die in der langen Kette enthalten sind, die zwischen den beiden Einheiten Z und Z' angeordnet ist, mindestens 18 beträgt und vorzugsweise zwischen 18 und einschließlich 112 liegt;

wobei das Harz enthält:

- eine wirksame Menge mindestens eines photochromen Färbemittels, das ihm photochrome Eigenschaften verleiht; sowie
- eine wirksame Menge mindestens eines sauren Additivs oder mindestens eines basischen Additivs; wobei diese Menge, die wirksam ist zur Verbesserung der Kinetik der Rückkehr des Harzes in den hellen Zustand, höchstens 5 Gew.-% der polymerisierbaren Monomeren der Zusammensetzung entspricht; wobei diese wirksame Menge vorzugsweise 0,01 bis 3 Gew.-% der Monomeren darstellt.

2. Harz nach Anspruch 1, **dadurch gekennzeichnet, dass** die Zusammensetzung mindestens ein Monomer der Formel (I) enthält.

3. Harz nach einem der Ansprüche 1 oder 2, **dadurch gekennzeichnet, dass** die Zusammensetzung mindestens ein Monomer der Formel (III) enthält, in der $R_3$ für einen Isopropenyl-Rest und $R_5$ für einen Alkylenoxid-Rest oder ein Polyalkylenoxid der Formel stehen:

$$-\!\left(R-O\right)_m- .$$

4. Harz nach einem der Ansprüche 1 bis 3, **dadurch gekennzeichnet, dass** die Zusammensetzung mindestens ein Monomer der Formel (IV) enthält, in der $R_3$ und $R'_3$ Isopropenyl-Reste darstellen, Y = O und Z und Z' Harnstoff-Funktionen darstellen.

5. Harz nach einem der Ansprüche 1 bis 4, **dadurch gekennzeichnet, dass** die Zusammensetzung außerdem enthält

- mindestens ein aromatisches Monovinyl-Monomer der Formel (C):

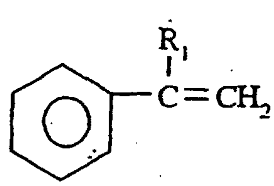

worin $R_1$ = H oder $CH_3$; und/oder
- mindestens ein aromatisches Divinyl-Monomer der Formel (D):

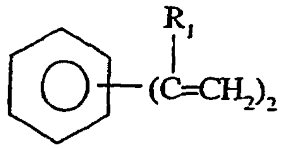

worin $R_1$ = H oder $CH_3$; und/oder

- mindestens ein (Meth)Acrylmonomer der Formel (E):

$$CH_2 = C(R)\text{-}COOR'$$

worin R = H oder $CH_3$ und R' steht für einen linearen oder verzweigten Alkylrest mit 1 bis 16 Kohlenstoffatomen, einen gegebenenfalls substituierten Benzyl- oder Phenoxy($C_1$-$C_4$)alkyl-Rest oder eine Polyoxyethylengruppe der Formel $-(CH_2\text{-}CH_2\text{-}O)_nR''$, worin n für eine ganze Zahl zwischen 1 und 10 steht und R" = $CH_3$ oder $C_2H_5$; und/oder

  - Diallylphthalat und/oder
  - mindestens ein Acrylmonomer, das mindestens 3 reaktionsfähige Funktionen aufweist, das vorzugsweise ausgewählt ist aus der Gruppe:

    + Pentaerythrittriacrylat,
    + Pentaerythrittetraacrylat,
    + propoxyliertes Glycerintriacrylat,
    + Trimethylolpropantriacrylat,
    + Polyurethantriacrylat,
    + Dipentaerythrit-hexaacrylat,

und vorzugsweise besteht aus Pentaerythrit-triacrylat.

6. Harz nach einem der Ansprüche 1 bis 5, **dadurch gekennzeichnet, dass** das (die) photochrome(n) Färbemittel ausgewählt ist (sind) aus Chromenen.

7. Harz nach einem der Ansprüche 1 bis 6, **dadurch gekennzeichnet, dass** es enthält mindestens ein saures Additiv, ausgewählt aus der Gruppe der copolymerisierbaren Säuren und nicht-copolymerisierbaren Säuren, wobei das saure Additiv vorzugsweise eine Dissoziationskonstante $k > 10^{-6}$ hat.

8. Harz nach Anspruch 7, **dadurch gekennzeichnet, dass** das saure Additiv ausgewählt ist aus:

   - organischen Sulfonsäuren;
   - organischen Phosphor enthaltenden Säureverbindungen;
   - Carbonsäuren.

9. Harz nach Anspruch 8, **dadurch gekennzeichnet, dass** das saure Additiv ist eine Sulfonsäure, vorzugsweise ausgewählt aus p-Toluolsulfonsäure, Naphthalinsulfonsäuren, Sulfosalicylsäuren, Hydroxybenzolsulfonsäuren und Dodecylbenzolsulfonsäuren.

10. Harz nach Anspruch 8, **dadurch gekennzeichnet, dass** das saure Additiv ist eine Phosphor enthaltende Verbindung, vorzugsweise ausgewählt aus Diphenylphosphorsäure, Diphenylphosphinsäure, Bis(p-methoxy-phenyl) phosphinsäure, Alkylphosphorsäuren und Alkylphosphonsäuren.

11. Harz nach Anspruch 8, **dadurch gekennzeichnet, dass** das saure Additiv ist eine aliphatische Carbonsäure, vorzugsweise ausgewählt aus Ameisensäure, Essigsäure, Propionsäure, Buttersäure, Isobuttersäure, Chloressigsäuren, Glycolsäure, Cyclohexancarbonsäure, Oxalsäure, Malonsäure, Bernsteinsäure, Fumarsäure, Maleinsäure, Apfelsäure, Acrylsäure, Methacrylsäure, Krotonsäure, Propionsäure, Itaconsäure, Aconitsäure und Mono-2-(methacryloxy)-ethylsuccinat; vorzugsweise besteht aus einer Acryl-, Methacryl- oder Maleinsäure.

**12.** Harz nach Anspruch 8, **dadurch gekennzeichnet, dass** das saure Additiv ist eine aromatische Carbonsäure, vorzugsweise ausgewählt aus Benzoesäure, o-, m-, p-Toluolsäuren, Naphtoesäuren, Salicylsäuren, Phenylessigsäure, Mandelsäure, Chloro- und Nitrobenzoesäuren, Veratrumsäure, o-Phthalsäure, o-Phenyldiessigsäure, Tricarballylsäure und Mono-2-(methacryloxy)ethylphthalat; vorzugsweise besteht aus 3-Methylsalicylsäure oder 4-Methylsalicylsäure.

**13.** Harz nach einem der Ansprüche 1 bis 6, **dadurch gekennzeichnet, dass** es enthält mindestens ein basisches Additiv, ausgewählt aus der Gruppe der copolymerisierbaren Basen und nicht-copolymerisierbaren Basen.

**14.** Harz nach Anspruch 13, **dadurch gekennzeichnet, dass** das basische Additiv ist ein Acrylat- oder Methacrylat-Monomer, das einen Träger mindestens einer tertiären Amin-Funktion darstellt, vorzugsweise ausgewählt aus Dimethylaminoethylmethacrylat und Diethylaminoethylmethacrylat.

**15.** Harz nach Anspruch 13, **dadurch gekennzeichnet, dass** das basische Additiv ist ein Triarylphosphin, vorzugsweise Triphenylphosphin.

**16.** Artikel bzw. Gegenstand, vorzugsweise ophthalmischer Artikel bzw. Gegenstand, der teilweise oder vollständig besteht aus einem Harz nach einem der Ansprüche 1 bis 15.

**17.** Radikalisch polymerisierbare Zusammensetzung, die einen Vorläufer eines Harzes nach einem der Ansprüche 1 bis 15 darstellt, **dadurch gekennzeichnet, dass** sie umfasst:

- mindestens ein difunktionelles Monomer, ausgewählt aus solchen der Formel (I) und der Formel (II) wie in Anspruch 1 definiert;
- mindestens ein anderes (weiteres) Monomer, ausgewählt aus den monofunktionellen Monomeren der Formel (III) und den difunktionellen Alken-Monomeren der Formel (IV), wobei die Formeln (III) und (IV) wie in Anspruch 1 definiert sind;
- mindestens ein saures Additiv oder mindestens ein basisches Additiv; vorzugsweise in einer Menge, die wirksam ist zur Verbesserung der Kinetik der Rückkehr eines photochromen Harzes in den hellen Zustand, das aus der polymerisierbaren Zusammensetzung hergestellt ist, die höchstens 5 Gew.-% der polymerisierbaren Monomeren darstellt, die in der Zusammensetzung enthalten sind; wobei diese wirksame Menge besonders bevorzugt 0,01 bis 3 Gew.-% der Monomeren darstellt.

**18.** Verfahren zur Herstellung eines photochromen Harzes nach einem der Ansprüche 1 bis 15, **dadurch gekennzeichnet, dass** es umfasst:

- die radikalische Copolymerisation einer Zusammensetzung, die enthält mindestens ein difunktionelles Monomer, ausgewählt aus solchen der Formeln (I) und (II), wie in Anspruch 1 definiert, und mindestens ein anderes (weiteres) Monomer, ausgewählt aus den monofunktionellen Monomeren der Formel (III) und den difunktionellen Alken-Monomeren der Formel (IV), wobei die Formeln (III) und (IV) wie in Anspruch 1 definiert sind; und
- die Einführung mindestens eines photochromen Färbemittels und mindestens eines sauren oder basischen Additivs in die zu copolymerisierende Zusammensetzung vor der Copolymerisation und/oder, vorzugsweise oder, nach der Copolymerisation, wobei das (die) Färbemittel und Additiv(e) gemeinsam oder getrennt in einer Menge verwendet werden, die wirksam ist, um dem Harz photochrome Eigenschaften zu verleihen bzw. die Kinetik der Rückkehr des Harzes in den hellen Zustand zu verbessern.

## Revendications

**1.** Résine photochromique, susceptible d'être obtenue par copolymérisation radicalaire d'une composition renfermant :

- au moins un monomère difonctionnel, choisi parmi ceux de formule (I) et (II) ci-après :
  - formule (I):

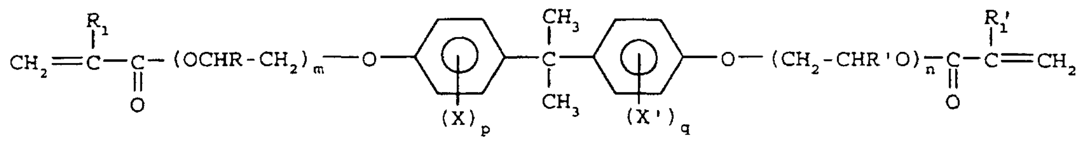

dans laquelle :

- $R_1$, $R'_1$, R et R', identiques ou différents, sont indépendamment un hydrogène ou un groupe méthyle ;
- m et n sont, indépendamment, des nombres entiers compris entre 0 et 4 inclus ; et sont avantageusement indépendamment égaux à 1 ou 2 ;
- X et X', identiques ou différents, sont un halogène et représentent de préférence un chlore et/ou un brome ;
- p et q sont, indépendamment, des nombres entiers compris entre 0 et 4 inclus ;

+ formule (II):

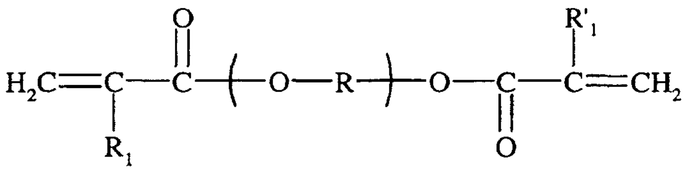

dans laquelle :

- $R_1$ et $R'_1$, identiques ou différents, sont indépendamment un hydrogène ou un groupe méthyle ;
- R est un radical alkylène linéaire ou ramifié comportant de 2 à 8 atomes de carbone, un radical cycloalkylène comportant de 3 à 6 atomes de carbone, un radical éther de formule (R'-O-R") dans laquelle R' et R", identiques ou différents, sont indépendamment un radical alkylène linéaire ou ramifié comportant de 2 à 4 atomes de carbone;

• au moins un autre monomère, choisi parmi les monomères monofonctionnels de formule (III) ci-après et les monomères difonctionnels alcéniques de formule (IV) ci-après :

+ formule (III):

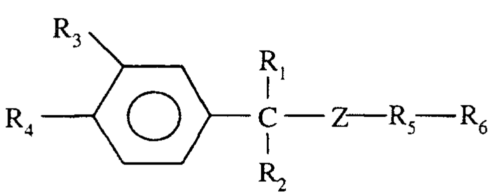

dans laquelle :

- $R_1$ et $R_2$, identiques ou différents, sont indépendamment l'hydrogène ou un radical alkyle, linéaire ou ramifié, avantageusement linéaire, comportant de 1 à 4 atomes de carbone ; et correspondent de façon particulièrement avantageuse à un groupe méthyle ;
- $R_3$ et $R_4$, différents, sont indépendamment l'un l'hydrogène et l'autre un radical alcényle comportant de 2 à 6 atomes de carbone, avantageusement de 2 à 4 atomes de carbone, et d'une façon particulièrement avantageuse un radical isopropényle ;
- Z représente une fonction carbamate (-NH-CO-O-), une fonction thiocarbamate (-NH-CO-S-), une fonction urée (-NH-CO-$NR_7$, avec $R_7$ qui représente l'hydrogène ou un groupe alkyle linéaire, ramifié ou cyclique qui comporte de 1 à 6 atomes de carbone) ou une fonction oxazolidone

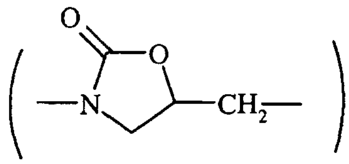 ;

- $R_5$ est choisi dans le groupe comprenant :

  + les radicaux alkylene oxide et les chaînes polyalkylene oxyde de formule:

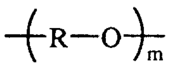

  dans laquelle les groupes R, identiques ou différents lorsque m ≥ 2, sont des radicaux alkylène, linéaires ou ramifiés, qui comportent de 2 à 5 atomes de carbone et m est un nombre entier, tel que le nombre total d'atomes de carbone desdits radicaux alkylène oxyde et chaînes polyalkylène oxyde soit compris entre 2 et 112;
  + les radicaux ester et les chaînes polyester de formule :

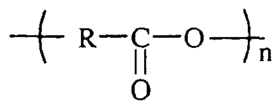

  dans laquelle les groupes R, identiques ou différents lorsque n ≥ 2, sont des radicaux alkylène, linéaires ou ramifiés, qui comportent de 2 à 5 atomes de carbone et n est un nombre entier, tel que le nombre total d'atomes de carbone desdits radicaux ester et chaînes polyester soit compris entre 2 et 168 ;
  + les radicaux siloxanes et les chaînes polysiloxane de formule:

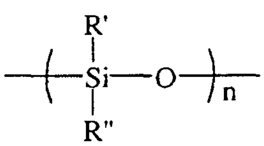

  dans laquelle les groupes R' et R", indépendamment, identiques ou différents lorsque n ≥ 2, sont des radicaux alkyles qui comportent 1 ou 2 atomes de carbone et n est un nombre entier compris entre 1 et 18 ;
  + les radicaux carbonate et chaînes polycarbonate de formule:

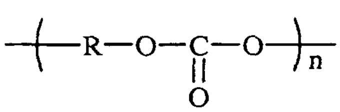

  dans laquelle les groupes R, identiques ou différents lorsque n ≥ 2, sont des radicaux alkylène, linéaires ou ramifiés, qui comportent de 1 à 5 atomes de carbone et n est un nombre entier compris entre 1 et 21 ;
- $R_6$ est un radical alkyle ou un radical aryle ;

  + formule (IV):

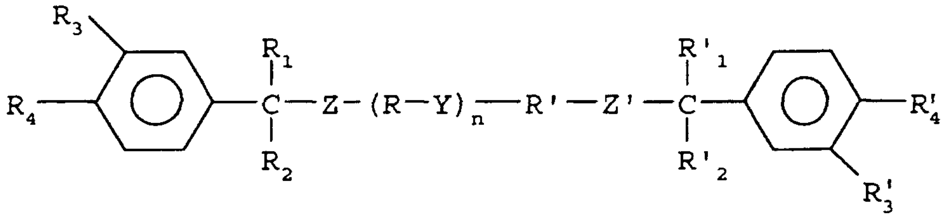

dans laquelle :

- $R_1$, $R'_1$, $R_2$ et $R'_2$, identiques ou différents, sont indépendamment l'hydrogène ou un radical alkyle, linéaire ou ramifié, avantageusement linéaire, comportant de 1 à 4 atomes de carbone ; et correspondent de façon particulièrement avantageuse à un groupe méthyle ;
- $R_3$ et $R_4$, différents, sont indépendamment l'un l'hydrogène et l'autre un radical alcényle comportant de 2 à 6 atomes de carbone, avantageusement de 2 à 4 atomes de carbone, et d'une façon particulièrement avantageuse un radical isopropényle ;
- $R'_3$ et $R'_4$, différents, sont indépendamment l'un l'hydrogène et l'autre un radical alcényle comportant de 2 à 6 atomes de carbone, avantageusement de 2 à 4 atomes de carbone, et d'une façon particulièrement avantageuse un radical isopropényle ; avec avantageusement $R_3 = R'_3$ et $R_4 = R'_4$ ;
- Z représente une fonction carbamate (-NH-CO-O-), une fonction thiocarbamate (-NH-CO-S-), une fonction urée (-NH-CO-NH-) ou une fonction oxazolidone

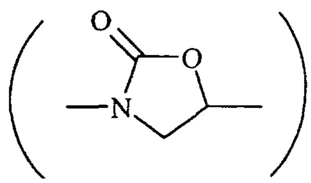 ;

- Z', indépendamment de Z et de façon avantageuse respectivement par rapport à Z, représente une fonction carbamate (-O-CO-NH-), une fonction thiocarbamate (-S-CO-NH-), une fonction urée (-NH-CO-NH-) ou une fonction oxazolidone

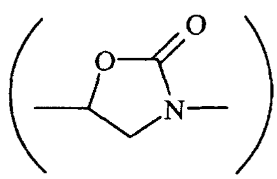 ;

- R' représente un radical alkylène linéaire ou ramifié comportant de 2 à 4 atomes de carbone ;
- R, identique ou différent quand $n \geq 2$, est un radical alkylène linéaire ou ramifié comportant de 2 à 4 atomes de carbone ;
- Y, identique ou différent quand $n \geq 2$, est l'oxygène ou le soufre ;
- n est un nombre entier défini de tel sorte que le nombre total d'atomes de carbone, contenus dans la chaîne longue située entre les deux motifs Z et Z', soit au moins égal à 18 et d'une façon avantageuse soit compris entre 18 et 112 inclus ;

ladite résine renfermant :

- une quantité efficace d'au moins un colorant photochromique, lui conférant des propriétés photochromiques ; ainsi qu'
- une quantité efficace d'au moins un additif acide ou d'au moins un additif basique ; ladite quantité, efficace pour améliorer la cinétique de retour à l'état clair de ladite résine, représentant au plus 5 % du poids des monomères polymérisables de la composition ; ladite quantité efficace représentant avantageusement entre 0,01 et 3 % du poids desdits monomères.

**2.** Résine selon la revendication 1, **caractérisée en ce que** ladite composition renferme au moins un monomère de formule (I).

**3.** Résine selon l'une des revendications 1 ou 2, **caractérisée en ce que** ladite composition renferme au moins un monomère de formule (III) dans laquelle $R_3$ est un radical isopropényle et $R_5$ représente un radical alkylène oxyde ou polyalkylène oxyde de formule

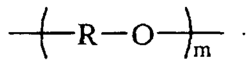

**4.** Résine selon l'une quelconque des revendications 1 à 3, **caractérisée en ce que** ladite composition renferme au moins un monomère de formule (IV) dans laquelle $R_3$ et $R'_3$ sont des radicaux isopropényle, Y = O et Z et Z' sont des fonctions urée.

**5.** Résine selon l'une quelconque des revendications 1 à 4, **caractérisée en ce que** ladite composition renferme en outre :

- au moins un monomère monovinylique aromatique de formule (C) :

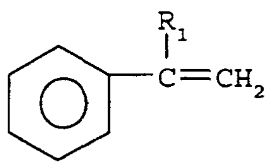

dans laquelle $R_1$ = H ou $CH_3$ ;
et/ou

- au moins un monomère divinylique aromatique de formule (D) :

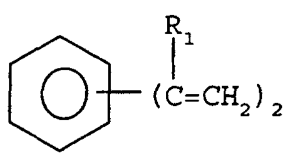

dans laquelle $R_1$ = H ou $CH_3$ ;
et/ou

- au moins un monomère (méth)acrylique de formule (E) :

$$CH_2 = C(R)\text{-}COOR'$$

dans laquelle R = H ou $CH_3$ et R' est un radical alkyle linéaire ou ramifié, comportant de 1 à 16 atomes de carbone, un radical benzyle ou
phénoxy $(C_1\text{-}C_4)$alkyle éventuellement substitué ou un groupe polyoxyéthylène de formule $-(CH_2\text{-}CH_2\text{-}O)_nR''$ dans laquelle n est un nombre entier compris entre 1 et 10 et R'' = $CH_3$ ou $C_2H_5$ ;
et/ou

- du diallylphtalate,
et/ou
- au moins un monomère acrylique présentant au moins trois fonctions réactives, avantageusement choisi parmi :

- + le triacrylate de pentaérythritol,
- + le tétraacrylate de pentaérythritol,
- + le triacrylate de glycérol propoxylé,
- + le triacrylate de triméthylolpropane,
- + le triacrylate de polyuréthane,
- + l'hexaacrylate de dipentaérythritol,

et consistant préférentiellement en le triacrylate de pentaérythritol.

6. Résine selon l'une quelconque des revendications 1 à 5, **caractérisée en ce que** le(s)dit(s) colorant(s) photochromique(s) est(sont) choisi(s) parmi les chromènes.

7. Résine selon l'une quelconque des revendications 1 à 6, **caractérisée en ce qu'**elle renferme au moins un additif acide, choisi dans le groupe des acides copolymérisables et des acides non copolymérisables ; ledit additif acide présentant avantageusement une constante de dissociation : $k > 10^{-6}$.

8. Résine selon la revendication 7, **caractérisé en ce que** ledit additif acide est choisi parmi :

- les acides organiques sulfoniques ;
- les composés organiques acides phosphorés ;
- les acides carboxyliques.

9. Résine selon la revendication 8, **caractérisé en ce que** ledit additif acide est un acide sulfonique, notamment choisi parmi l'acide paratoluènesulfonique, les acides naphtalènesulfoniques, les acides sulfosalicyliques, les acides hydroxybenzènesulfoniques et les acides dodécylbenzènesulfoniques.

10. Résine selon la revendication 8, **caractérisée en ce que** ledit additif acide est un composé phosphoré, notamment choisi parmi l'acide diphénylphosphorique, l'acide diphénylphosphinique, l'acide bis(p-méthoxyphényl)phosphinique, les acides alkylphosphoriques et les acides alkylphosphoniques.

11. Résine selon la revendication 8, **caractérisée en ce que** ledit additif acide est un acide carboxylique aliphatique, notamment choisi parmi les acides formique, acétique, propionique, butyrique, isobutyrique, chloroacétiques, glycolique, cyclohexanecarboxylique, oxalique, malonique, succinique, fumarique, maléique, malique, acrylique, méthacrylique, crotoniques, propiolique, itaconique, aconitique et le mono-2-(méthacryloxy)éthyl succinate ; consistant avantageusement en un acide acrylique, méthacrylique ou maléique.

12. Résine selon la revendication 8, **caractérisée en ce que** ledit additif acide est un acide carboxylique aromatique, notamment choisi parmi l'acide benzoïque, les acides o- , m-, p-toluiques, les acides naphtoïques, salicyliques, phénylacétique, mandélique, chloro- et nitrobenzoïques, veratrique, o-phtalique, o-phényldiacétique, tricarballylique et le mono-2-(méthacryloxy)éthyl phtalate ; consistant avantageusement en l'acide 3-méthylsalicylique ou en l'acide 4-méthylsalicylique.

13. Résine selon l'une quelconque des revendications 1 à 6, **caractérisée en ce qu'**elle renferme au moins un additif basique, choisi dans le groupe des bases copolymérisables et des bases non copolymérisables.

14. Résine selon la revendication 13, **caractérisée en ce que** ledit additif basique est un monomère acrylate ou méthacrylate, porteur d'au moins une fonction amine tertiaire, notamment choisi parmi le méthacrylate de diméthylaminoéthyle et le méthacrylate de diéthylaminoéthyle.

15. Résine selon la revendication 13, **caractérisée en ce que** ledit additif basique est une triarylphosphine, avantageusement la triphénylphosphine.

16. Article, notamment ophtalmique, constitué, en totalité ou en partie, d'une résine selon l'une quelconque des revendications 1 à 15.

17. Composition polymérisable par voie radicalaire, précurseur d'une résine selon l'une quelconque des revendications 1 à 15, **caractérisé en ce qu'**elle comprend :

- au moins un monomère difonctionnel choisi parmi ceux de formule (I) et formule (II), telles que définies à la revendication 1;
- au moins un autre monomère, choisi parmi les monomères monofonctionnels de formule (III) et les monomères difonctionnels alcéniques de formule (IV), formules (III) et (IV) telles que définies à la revendication 1 ;
- au moins un additif acide ou au moins un additif basique ; avantageusement en une quantité, efficace pour améliorer la cinétique de retour à l'état clair d'une résine photochromique obtenue à partir de ladite composition polymérisable, représentant au plus 5 % du poids des monomères polymérisables présents dans ladite composition ; ladite quantité efficace représentant très avantageusement entre 0,01 et 3 % du poids desdits monomères.

**18.** Procédé pour la préparation d'une résine photochromique selon l'une quelconque des revendications 1 à 15, **caractérisé en ce qu'**il comprend :

- la copolymérisation radicalaire d'une composition renfermant au moins un monomère difonctionnel choisi parmi ceux de formules (I) et (II), telles que définies à la revendication 1 et au moins un autre monomère, choisi parmi les monomères monofonctionnels de formule (III) et les monomères difonctionnels alcéniques de formule (IV), formules (III) et (IV), telles que définies à la revendication 1 ;
- l'introduction, en amont de ladite copolymérisation, dans la composition à copolymériser et/ou, avantageusement ou, en aval de ladite copolymérisation, dans la composition copolymérisée, d'au moins un colorant photochromique et d'au moins un additif acide ou basique, lesdits colorant(s) et additif(s) intervenant, conjointement ou séparément, en quantité efficace pour, respectivement, conférer des propriétés photochromiques à la résine et améliorer la cinétique de retour à l'état clair de ladite résine.